# EUROPEAN PATENT APPLICATION

(11) **EP 4 173 979 A1**
(43) Date of publication of application: **03.05.2023**
(21) Application number: 21205436.5
(22) Date of filing: 29.10.2021
(51) Int. Cl.: B65B 69/00

(54) **APPARATUS FOR UNPACKING AN OPTICAL ELEMENT AND RELATED METHOD**

(71) Applicant: Satisloh AG, 6340 Baar (CH)
(72) Inventor: LOTZ, Jan, 35641 Schöffengrund (DE)
(74) Representative: Croonenbroek, Thomas Jakob

(57) **Abstract**

The invention relates to an apparatus (100) and a related method for unpacking optical elements disposed in a package box which is closed. The apparatus (100) comprises
- a package identification unit (102) equipped with a reader (104) for identifying the package box ,
- a first interface (106) to exchange data with a package database containing information related to the dimensions and identity of package boxes , to the orientation of an optical element within a package box , to the presence or not of a plastic cup within a package box,
- a laser cutting unit (110) configured to cut a package box according to a dedicated cutting pattern,
- an opening and take-out unit (112) for opening a package box which has been cut according to the dedicated cutting pattern, and for taking the optical element out of the opened package,
a waste management unit (114) configured to sort out the empty package box and separately, when present, a plastic cup.

## Description

### FIELD OF THE INVENTION

The invention relates generally to an automated lens manufacturing facility and process and more specifically to an apparatus for unpacking an optical element, in particular a lens blank, and a related method.

### BACKGROUND AND PRIOR ART

If in the following, by way of example, reference is made to "optical elements", in particular "spectacle lenses" for workpieces with optically effective surfaces there is to be understood by that not only optical elements of mineral glass, but also optical elements of all other customary materials such as polycarbonate, CR 39, HI index, etc., thus also plastics material.

The working or processing stations in production labs or manufacturing facilities for producing individual spectacle lenses from customary materials for example polycarbonate, mineral glass, and CR 39, HI-index, in accordance with a prescription order—also called "job"—are usually automated to a high degree. In that regard, serving within the production as transport means are transportation boxes — also termed prescription boxes or "job trays"—which are transported between the individual stations by way of, for example, transport belts, transverse roller devices for transverse exclusion from the material flow, lifting devices, switches, etc. Such transportation boxes are the subject of, for example, German Standard DIN 58763.

As described in, for example, document U.S. Publication No. 2004/0235397 in each instance the right hand and left hand spectacle lenses of a prescription order and optionally the associated precisiongrinding tool or polishing tool for the respective spectacle lens can be received in the transportation boxes. In addition, a transportation box of that kind has a compartment for the often written in-house order, generally in paper form. This usually carries a marking in the form of a barcode or the like. On many occasions the transportation boxes themselves are also equipped with so-called "transponders" or "Radio Frequency Identification Devices", (RFID for short), i.e. semiconductor elements for storage and transmission of data with the help of which an identification of the respective prescription order and the instantaneous state of processing of the spectacle lenses is possible.

Optical elements of various materials have to be supplied by the transportation boxes to different work stations or machines at which the optical elements are processed by different work materials (for example, polishing media, polishing pads) as well as different process parameters.

The production process begins generally with the choice of appropriate optical element in form of a lens blanks, in particular semi-finished lens blanks.

A semi-finished lens blank comprises for example a first face, a second face opposite said first face, and an edge between the first face and the second face.

The first face possesses a final curvature and is most often already coated, starting from a substrate comprised of, e.g., mineral glass, polycarbonate, PMMA, CR 39, Trivex<^{®}>, HI index, etc., as the case may be, with a standard hard coating, a standard antireflection coating on top of the hard coating, a standard top coating on top of the antireflection coating, and a special temporary grip coating on top of the top coating.

If a prescription order is on hand, then a process control predetermines the semi-finished lens blank appropriate thereto, normally two semi-finished lens blanks, a respective one for each of the left hand and right hand spectacle lenses of the prescription order, but in a given case also only one if only one spectacle lens is to be made.

In order to optimize the manufacturing process, it exists a wide variety of semi-finished lens blanks that are sold by various manufacturers.

Each manufacturer sells his own lens blanks in specific carton package boxes. These have specific dimensions and are not standardized for example in height of width. Moreover, in order to protect and immobilize the lens blanks within the carton boxes, the lens blank may be disposed in a further plastic cup or the carton box may present specific carton flaps that cooperate with the edge of the lens blank for immobilization.

The association of the lens blanks, which are predetermined by the process control, with the respective prescription order is usually undertaken as a manual process: an operator chooses and takes the appropriate lens blanks in a store, unpacks them and then places them in the transportation box.

This is quite a repetitive work and a worker may put a not appropriate lens blank in a transportation box.

The document US20210130026A1 discloses method and an apparatus for unpacking a workpiece, in particular an optical lens or an optical lens blank, from a package and includes an automated cutting open step of a first package side of the package, and an automated sliding of the workpiece out of the package step on the first package side. The unpacking apparatus for unpacking a workpiece from a package, has a feed station for receiving a package in which a workpiece is arranged, a cutting-open station having a first cutting or sawing tool with rotating blades for the automated cutting open of a first package side of the package downstream of the feed station, and a slide-out station downstream of the cutting-open station. A relative movement can be produced between the package and the workpiece in an automated manner so that the workpiece slides out of the package on the first package side.

However, a thorough examination showed that the proposed solution has some substantial drawbacks.

In particular, the rotating sawing blades for cutting the carton package generate small dust particles that may adhere to the lens blank and need to be removed before any further manufacturing process can be performed.

In addition, when the lens blank is disposed in a plastic cup, small parts of the plastic are also cut by the cutting tool and therefore it is difficult in this configuration to separate the carton waste and the plastic waste efficiently from each other.

Therefore one object of the present invention is to propose an improved apparatus for unpacking lens blank from different packages safely and to ensure that at the end the appropriate lens blanks can be disposed in the transportation carrier.

Moreover, when the package box comprises carton and plastic, an additional separate object of the invention is that after unpacking, the waste shall be sorted out by categories (at least for example plastic and carton) in order to respect environmental concerns.

To this extent, the present invention proposes an apparatus for unpacking optical elements disposed in a package box which is closed, the apparatus comprising
- a package identification unit equipped with a reader for identifying the package box,
- a first interface to exchange data with a package database containing information related to the dimensions and identity of package boxes, to the orientation of an optical element within a package box, to the presence or not of a plastic cup within a package box,
- a laser cutting unit configured to cut a package box according to a dedicated cutting pattern,
- an opening and take-out unit for opening a package box which has been cut according to the dedicated cutting pattern, and for taking the optical element out of the opened package,
- a waste management unit configured to sort out the empty package box and separately, when present, a plastic cup.

Due to laser cutting and adapted cutting pattern, different types of package boxes can be opened in an optimized manner. Thanks to laser cutting, no cutting particles are spread and disposed on the optical elements. Additionally, only a carton wall is cut by the laser but no plastic part if present in the package box.

The apparatus may present one or several of the following aspects taken alone or in combination.

The apparatus may further comprise a second interface to exchange data with a job database containing data information related to lenses to be manufactured and a control unit for comparing that the optical element contained in a package box complies with a lens manufacturing job to be carried out.

A package box can be identified with a bar-code or a QR-code, and the package identification unit is for example configured to determine the relative position of the optical element within the package box in taking into account the orientation of the bar-code or QR-code as determined by the reader.

In case the optical element comprises a concave face to be processed, the apparatus further comprising in particular a robotized gripper configured to place a package box which is closed, in a way that the optical face to be processed of the optical element is oriented upwards.

The laser cutting unit may comprise an optical height sensor configured to measure the height of a package box and where the laser cutting unit is configured such that in function of the measured height, a cutting laser beam output by the laser cutting unit focuses on a top face of the package box.

The dedicated cutting pattern comprise for example at least one full cut line and at least one intermitted cut line serving as a hinge during opening of the package box.

The apparatus can further comprise a rotating plate having several reception places for receiving package boxes and disposed at a regular angular interval to each other.

The opening and take-out unit comprises in particular a hold-down device for holding down the package box.

The waste management unit comprises for example a mobile suction device configured to take, if present, a plastic cup out of the package box and to evacuate it in a first dedicated waste container and to evacuate the empty package box in a second dedicated waste container.

The invention also relates to a method for unpacking optical elements disposed in a package box which is closed, the method comprising
- a package identification step for identifying with a reader a package box,
- a data exchange step with a package database containing information related to the dimensions and identity of package boxes, to the orientation of an optical element within a package box, to the presence or not of a plastic cup within a package box,
- a laser cutting step for cutting a package box according to a dedicated cutting pattern,
- an opening and take-out step for opening a package box which has been cut according to the dedicated cutting pattern, and for taking the optical element out of the opened package,
- a waste management step configured to sort out the empty package box and separately, when present, a plastic cup.

The method may present one or several of the following aspects taken alone or in combination.

The method may comprise a second data exchange step with a job database containing data information related to lenses to be manufactured and a control step for comparing that the optical element contained in a package box complies with a lens manufacturing job to be carried out.

When a package box is identified with a bar-code or a QR-code, during the package identification step, the relative position of the optical element within the package box can be determined in taking into account the orientation of the bar-code or QR-code as determined by the reader.

In case the optical element comprises a concave face to processed, the method further comprises for example a step to place a package box which is closed, in a way that the optical face to be processed of the optical element is oriented upwards.

The height of a package box may be measured prior to the laser cutting step and where the focus of the laser beam can focus on a top face of the package box.

The dedicated cutting pattern may comprise at least a full cut line and at least one intermitted cut line serving as a hinge during opening of the package box.

### BRIEF DESCRIPTIONS OF THE DRAWINGS

Other advantages and characteristics will appear with the reading of the description of the following figures:
- FIG. 1 shows an example of a transportation carrier with two package boxes disposed therein,
- FIG.2 shows an example of a lateral side of a package box,
- FIG. 3 shows package box opened manually by the side with an optical element disposed therein,
- FIG. 4 shows package box opened manually by the side with a plastic cup extracted and disposed aside,
- FIG. 5 shows a schematic simplified view of the apparatus for unpacking optical elements disposed in a package box which is closed,
- FIG. 6 shows a synoptic view of the apparatus of figure 5,

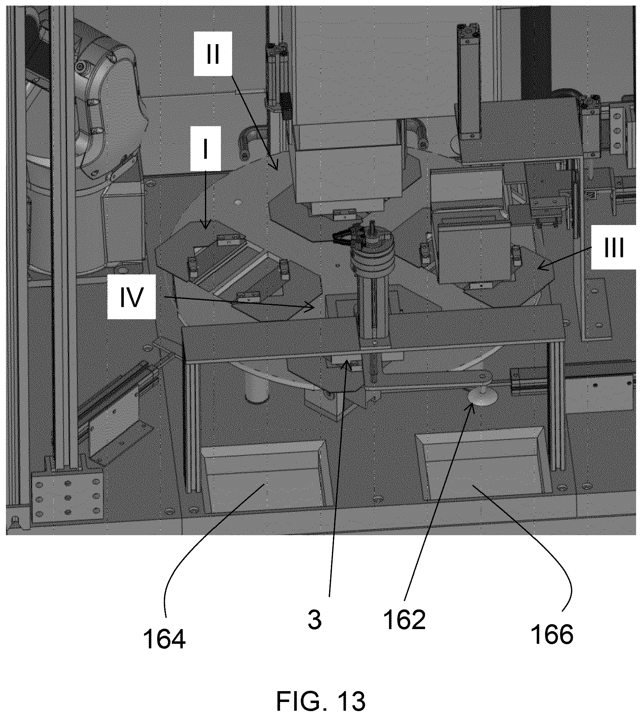

- FIG. 7 to 9 and 11 to 13 show details of the apparatus at different processing steps, and
- FIG. 10-A, 10-B, 10-C and 10-D show examples of different cutting patterns.

### DETAILED DESCRIPTION OF AN EMBODIMENT

The embodiment(s) in the following description are only to be considered as examples. Although the description may refer to one or several embodiments, this does not mean inevitably that every reference concerns the same embodiment, or that the characteristics apply only to a single embodiment. Simple characteristics of various embodiments can be also combined to new embodiments that are not explicitly described.

In the present description, the terms "upstream" and "downstream" are used according the following meaning: a first processing unit for a certain processing operation is placed upstream with respect to a second unit when the optical element undergoes first the operation in the first processing unit and then another operation in the second unit.

And a first processing unit is placed downstream with respect to a second unit when the optical element undergoes first the operation in the second unit and then another operation in the first unit.

By "surfacing", it is understood in particular polishing, grinding, fine grinding or finishing and the overall object is to yield a finished spectacle lens so that the curvature of a first (in this instance convex) face and the curvature of a machined second (in this instance concave) face cooperate to yield desired optical properties according to a prescription of the user of the spectacle lenses.

An optical element refers for example to an ophthalmic optical product, a lens blank or a semi-finished lens blank. The optical element may present or not an optical correction and may be used for as spectacle lens, in particular as sunglasses or masks.

The optical element may be formed of one layer or several layers attached to each other and forming a unitary element.

A semi-finished lens blank comprises for example a first face, a second face opposite said first face, and an edge between the first face and the second face. In many cases, one of the first or second face is already finished and does not need to undergo further processing steps.

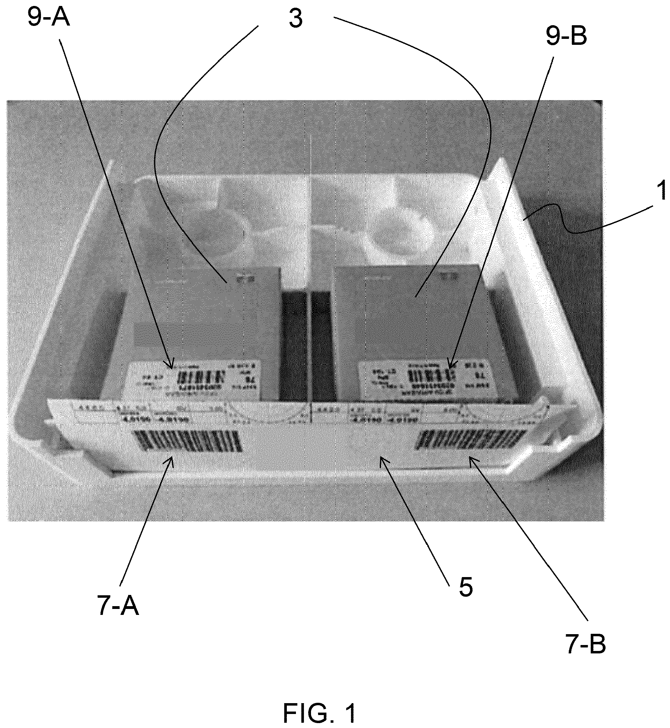

Figure 1 shows an example of a transportation box 1 with two package boxes 3, disposed therein.

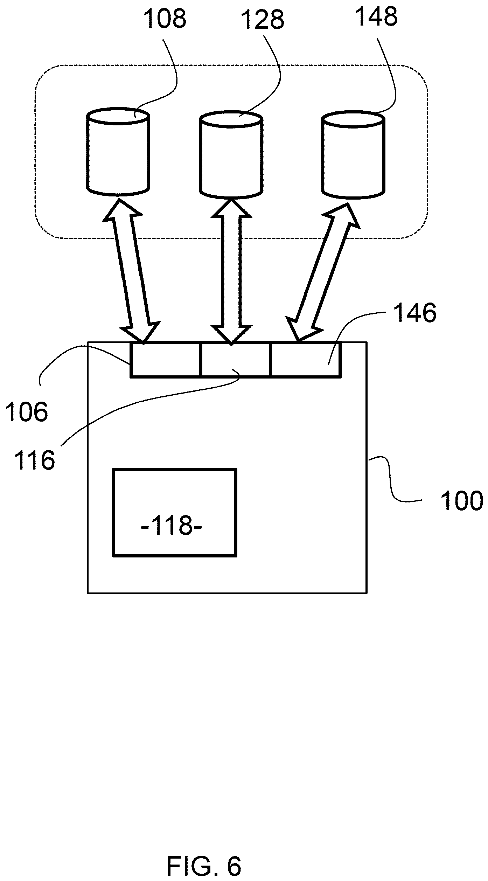

At a front side of the transportation box 1, a job-reference paper 5 is inserted having two bar codes 7-A, 7-B. These bar codes 7-A and 7-B correspond to specific jobs for manufacturing the lenses according to a prescription. The job and the relevant processing data is memorized in a specific LMS-database 128 (see figure 6) of a lens manufacturing system LMS and contains in particular information about semi-finished lens blanks to be used for specific jobs. In particular, in view of a specific prescription, le LMS-database determines which semi-finished lens blanks (supplier, reference, properties etc.) have to be used for a specific job to get at the final finished optical lenses according to the prescription of a wearer.

As can be seen on figure 1, the package boxes 3 comprise also each a specific identification codes 9-A and 9-B which is fixed on the boxes 3. The right package box 3 in figure 1 is for example for a right eye and the left package box 3 in figure 1 is for example for a left eye. In some cases, the transportation carrier only contains one package box 3, for example in case of reparation of only one lens for a wearer.

The specific identification codes 9-A and 9-B can be bar-codes or QR-codes or other identification information like a letter and/or number series or a combination thereof. Thanks to these identification codes, the optical element can entirely be identified.

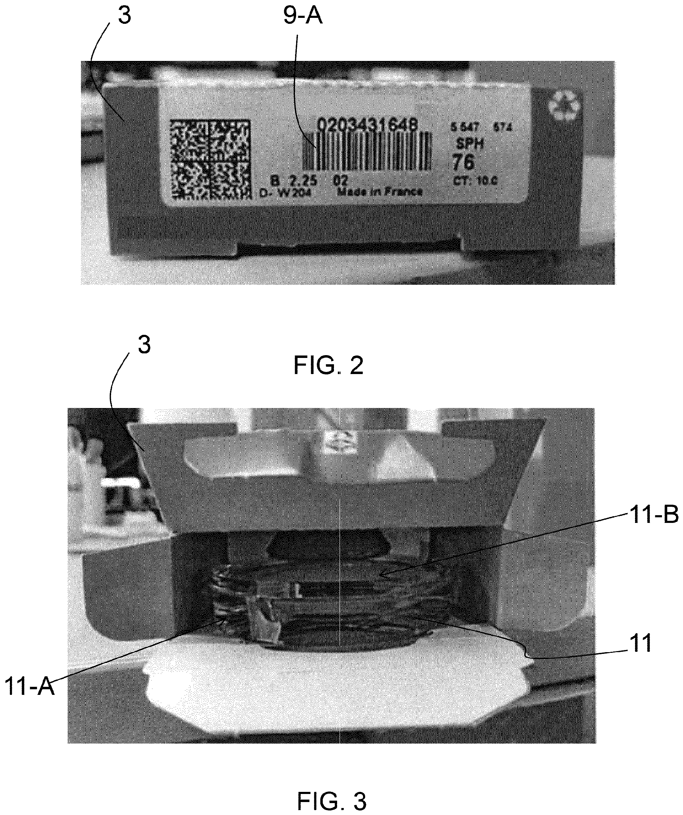

Figure 2 shows in a side view an example of a package box 3 with identification code 9-A. In the present example, only the bar-code is used for identification of the optical element within the package box 3, but other elements as the QR-code or the series of numbers can be used as well.

In figure 3 shows also in a side view the package box 3 of figure 2 which now has been opened and the optical element 11 is visible. It can also be seen that in this example, the package box 3 is a fully carton box where carton flaps are folded to the inside of the package in order to immobilize the optical element 11 in the package.

At this stage, it is important to observe that for one specific package box 3, the optical elements 11 are always disposed in the same way in the package box 3.

This means in particular, in case, like shown in figure 3, the optical element 11 is a semi-finished lens blank with an already finished convex face 11-A and a concave face 11-B to be processed, that the orientation / disposition of the optical element 11 within the package box can be linked unambiguously to the orientation of the identification information fixed on the package box 3, in particular on the side of the package box 3.

Thus, as shown in figures 2 and 3 as an example, when the bar-code is read from the left to the right, the convex face 11-A is directed to the bottom side of the package box 3 and the concave face 11-B is directed to the top side of the package box 3.

In case, the bar-code is to be read from the right to the left, the convex face 11-A would directed to the top side of the package box 3 and the concave face 11-B would directed to the bottom side of the package box 3.

This is quite of importance because for taking out the optical element 11, the package box should be oriented in a way that the concave face 11-B which needs to be processed is always upwards, directed to the top side of the package box 3 and only the top side would be opened ensuring that the convex face 11-A as less as possible exposed during the unpacking operations. It further allows manipulation of the optical element 11, for example by suction pads only, where only the concave face 11-B is in contact with a suction pad.

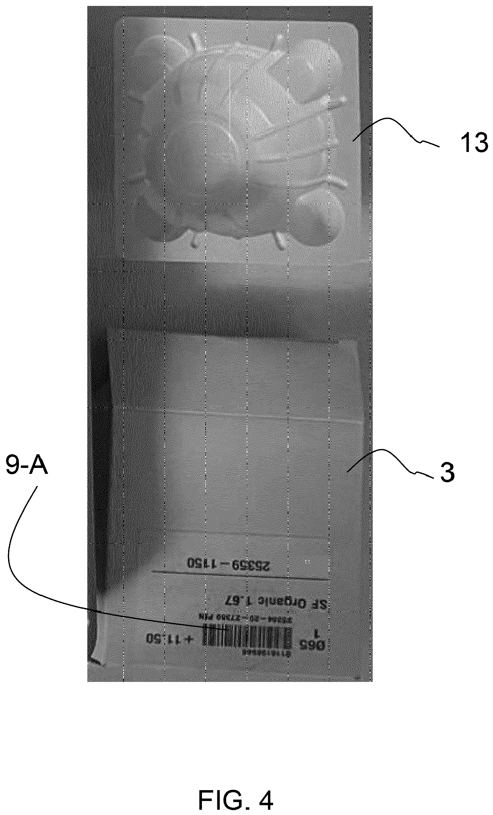

Figure 4 shows another example of a package box 3 and a related, in this case empty plastic cup 13. Normally, in a sealed package box 3, the optical element 11 is disposed in the plastic cup 13 and both are disposed within the package box 3 made of carton. It is clear that for environmental reasons, that once the optical element 11 is unpacked, in the plastic parts on the one side and the carton parts on the other side need to be separated. In a more developed embodiment, the applicant has observed that the cups of different suppliers may be made of different types of plastic and that it would be interesting to differentiate and sort out the different types of plastic.

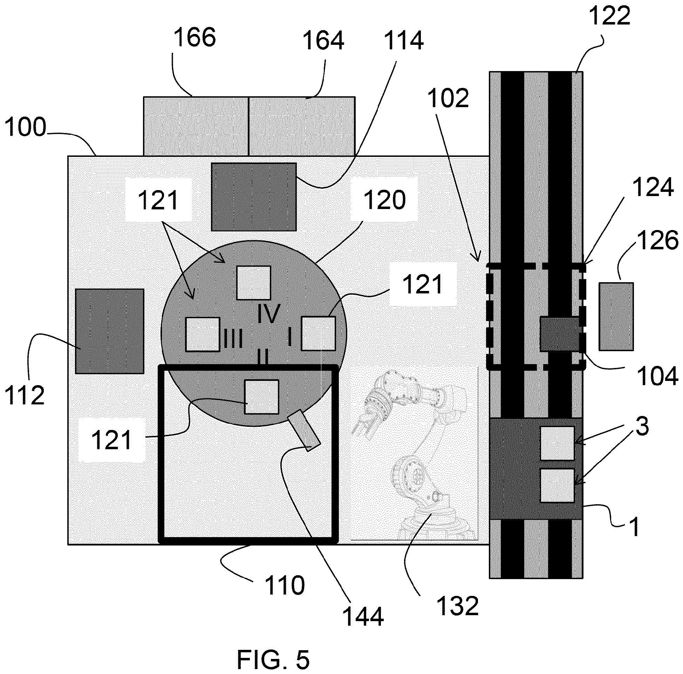

Having this in mind, figure 5 now presents a simplified scheme of an apparatus 100 for unpacking optical elements 11 disposed in a package box 3 which is closed.

Figure 6 shows a synoptic view of different in particular control and interface aspects of apparatus 100.

The apparatus 100 comprises in particular
- a package identification unit 102 equipped with a reader 104 for identifying a package box 3,
- a first interface 106 to exchange data with a package database 108 (see figure 6) containing information related to the dimensions and identity of package boxes 3 , to the orientation of an optical element 11 within a package box 3, to the presence or not of a plastic cup 13 within a package box 3,
- a laser cutting unit 110 configured to cut a package box 3 according to a dedicated cutting pattern,
- an opening and take-out unit 112 for opening a package box 3 which has been cut according to the dedicated cutting pattern, and for taking the optical element 11 out of the opened package box 3,
- a waste management unit 114 configured to sort out the empty package box 3 and separately, when present, a plastic cup 13.

The apparatus further may comprise a second interface 116 (see figure 6) to exchange data with a job database 128 of the above cited LMSsystem (Lens Manufacturing System) containing data information related to lenses to be manufactured and a control unit 118 for comparing that the optical element 11 contained in a package box 3 complies with a lens manufacturing job to be carried out.

In order to improve the throughput of the apparatus 100 the later comprises further a rotating plate 120 having several reception places 121 for receiving package boxes 3 and disposed at a regular angular interval, for example 90° to each other. Each reception place 121 is equipped with blocking members B which is configured to position and to immobilize a package box 3. The rotating plate 120 in this case defines for example four positions designated by roman numbers I, II, III, IV at 90°, at least three of them are associated respectively to units 110, 112 and 114 allowing to realize operations that will be described beneath in parallel.

As will be explained later, this will allow that several operations can be carried out at the same time and enhances the throughput of apparatus 100.

Of, course, the use of such a rotating plate 120 is not mandatory and one may envisage an apparatus where the different units are disposed along a line for example. However, the use of a rotating plate 120 allows having a compact footprint of the apparatus 100.

In the following, every above referenced unit will be described more in detail. In doing so, after a more structural description, the functioning of the different units will also be detailed.

In Figure 5, the apparatus 100 which is linked to a conveyor 122 configured to convey transportation boxes 1 and is part of a not shown global conveyor system between different processing stations. The conveyor system is for example controlled by a lens manufacturing system "LMS".

As can be seen in figure 5, a transportation box 1 with two closed package boxes 3 is conveyed to a park position 124 of the apparatus 100 which is materialized in the figure 5 by a hashed line.

At the park position 124 or when reaching this park position 124, a scanner 126 situated on the side of the conveyor opposite to the apparatus 100 scans for example both codes 7-A and 7-B of the job reference paper 5. This allows the LMS system to know which transportation box 1 is at park position 124 and contains package boxes 3 ready to be unpacked. The specific job(s) is for example memorized in above cited job database 128 of the LMS system.

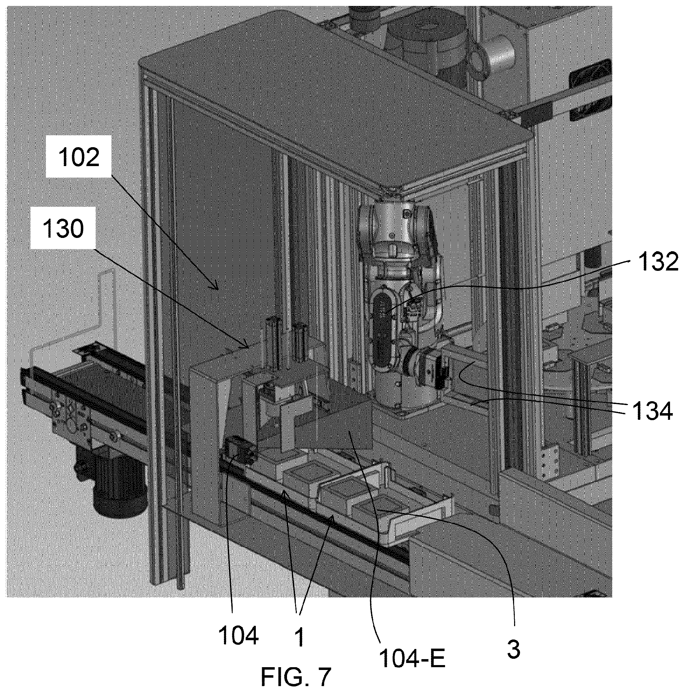

As stated above and shown in particular in figure 7, the apparatus 100 comprises a package identification unit 102 which is located and configured in a way that before a package box 3 is accepted in the apparatus 100 and unpacked, it is checked that the package boxes 3 in the transportation box 1 contain the optical elements 11 that are necessary and sufficient for realizing the lenses according to the specific job(s) present on the job reference paper 5.

If this is not the case, the transportation box 1 will be conveyed to a non-shown wait position where an operator can check what is going on.

As can be seen for example in figure 7, the apparatus 100 comprises to this extent a first suction unit 130 configured to take out one package box 3 out of the transportation box 1 and to present the package box to reader 104 for identification of the package box. In figure 7, a light emission cone 104-E of reader 104 is also drawn.

As the identification code for example 9-A is only present on one of the lateral sides of the package box 3, the first suction unit 130 is configured to rotate the package box at most 3 times at 90° in order to try to read with reader 104 the identification code 9-A.

If the identification code 9-A cannot be read, the concerned package box 3 is put back in the transportation box 1 and conveyed to the wait position.

If the identification code 9-A can be read, then the apparatus will first check through first interface 106 and via a communication channel in database 108 the parameters related to the dimensions and identity of package boxes 3, to the orientation of an optical element 11 within a package box 3, to the presence or not of a plastic cup 13 within a package box 3.

In particular it will be checked that the closed package box 3 belongs to a specific set of package boxes 3 that can be unpacked by apparatus 100. Furthermore, through second interface 116, it will be checked that the optical element 11 contained in the inspected package box 3 by reader 104 corresponds to the job data registered on the job reference paper 5. If either of these checks is negative, the whole transportation box 1 is sorted out in a wait position.

As explained above, from the orientation of the identification code 9-A presented to reader 104, it is possible to deduce the orientation / disposition of the optical element within the package box 3.

For this purpose, the package identification unit 102 is in addition configured to determine the relative position of the optical element 11 within the package box 3 in taking into account the orientation of the bar-code or QR-code 9-A as determined by the reader 104.

Once this is done, the closed package box 3 is transferred to reception place 121 at position I of rotating plate 120.

For this purpose, the apparatus 100 comprises a robotized gripper 132 which is configured to take a package box from the first suction unit 130 and to place a package box 3 which is closed, in a way that the optical face to be processed (in general concave face 11-B) of the optical element 11 is oriented upwards.

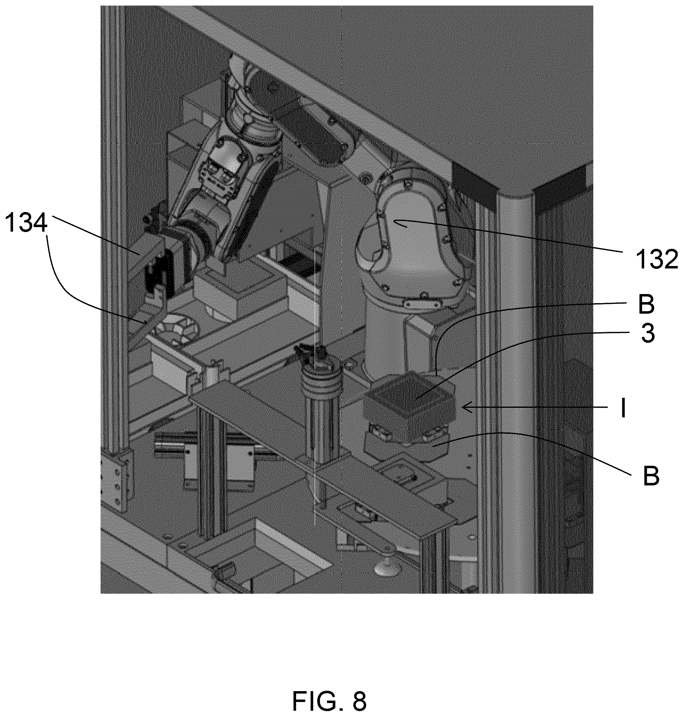

The robotized gripper 132 comprises mobile clamping fingers 134 (see for example figure 8) and is in addition configured to measure the width of the package box 3. The apparatus 100 then also checks if the width of the package box 3 corresponds to the attended width as memorized in the database 108. If the width does not correspond, then the concerned package box 3 is put back in the transportation box 1 and conveyed to the wait position.

Furthermore, once the package box 3 is immobilized in position I by the blocking members B of the rotating plate 120, the control system of apparatus 100 commands rotation of plate 120 of 90° in order that the package box 3 is positioned in position II which correspond to the working zone of the laser cutting unit 110.

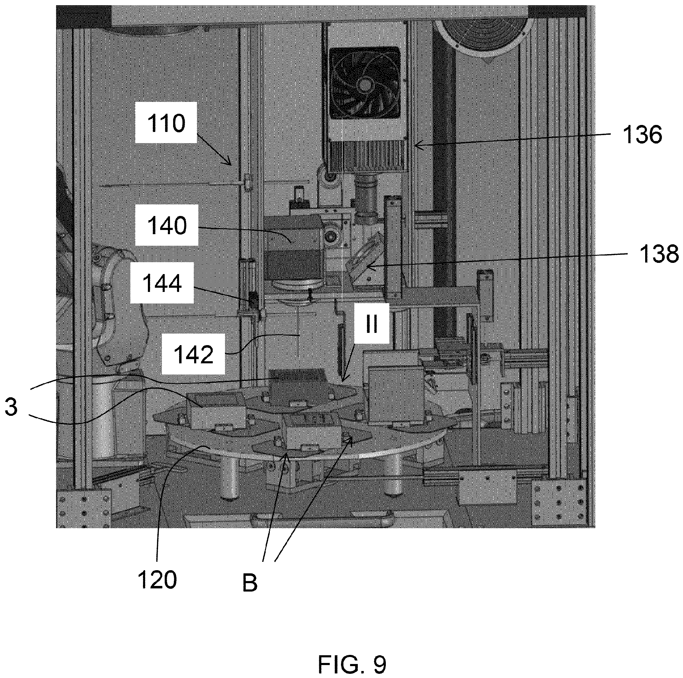

As can be seen in figures 5 and 9, the laser cutting unit 110 comprises a laser (for example a continuous infrared laser) 136, a mirror 138 and a laser beam scanning unit 140 which allows to direct the laser to different locations where the package box 3 has to be cut and to adapt the focus of the laser beam 142 which shall be located on the top side of the package box 3.

The laser cutting unit 110 comprises furthermore an optical height sensor 144 configured to measure the height of a package box 3.

Although the height of the package box 3 is also registered in database 108, the package box 3 may be a little bit damaged and for example squeezed.

The apparatus 100 also comprises a third interface 146 to communicate via a communication channel with cutting pattern database 148.

One should note that the databases 108, 128 and 148 may be separate databases memorized on separated devices, or two or even three of these databases may be programmed as a unique database. These databases may be at the manufacturing facility or also for example in a cloud.

Also the interfaces 106, 116 and 146 may be realized as one interface or two interfaces.

For this application, the measurement of the package box height allows to adjust precisely the focus of the laser beam 142 to get the best laser cutting conditions.

Once the package box 3 is immobilized in working position II, the laser cutting unit 110 may send a laser beam in order to cut the top part of the package box 3 according to a dedicated cutting pattern supplied by the third interface 146 and associated to the identified package box 3.

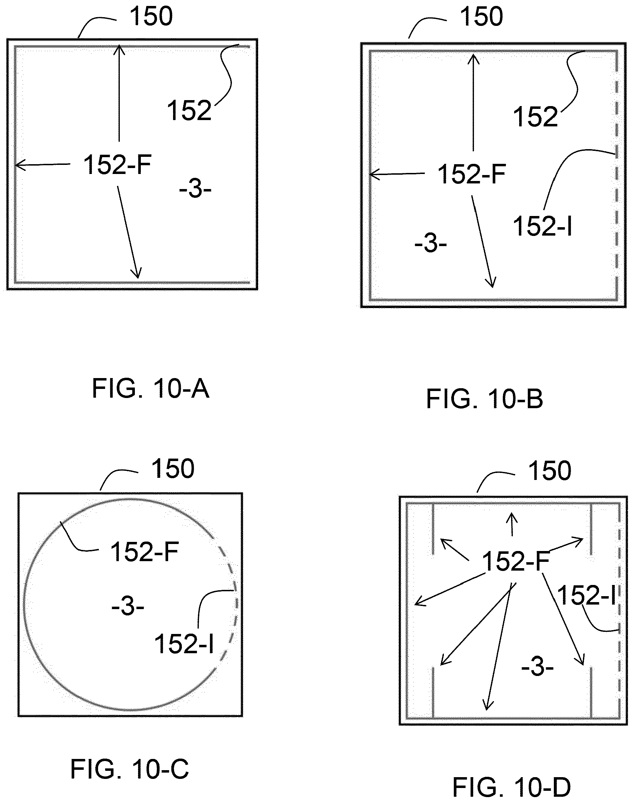

Examples of specific cutting patterns are presented in figures 10-A, 10-B, 10-C and 10-D.

In these figures, the package box 3 is represented with a continuous outer square line materializing the border or edge 150.

Lines 152 represent laser cutting lines.

As can be seen on these figures, the cutting patterns comprise for example at least one full cut line 152-F.

In figures 10-A, B, C and D, one can see respectively three, three, one and seven full cut lines 152-F. Only in figure 10-C, the full cut line is circular. In the other figures, the full cut lines are straight lines.

Some cutting patterns comprise in addition at least one intermitted cut line 152-1 which can serve as a hinge during opening of the package box 3. This is the case in figures 10-B, 10-C (part of a circle) and figure 10-D. The cutting pattern of figure 10-D is for example well adapted when no plastic cup 13 is present in the package box 3.

During the cutting process, a protection shield (not shown) surrounds the laser and the package box 3 in order to protect from possible laser light that may be scattered.

After the laser cutting process, the rotating plate 120 moves the cut package box 3 from position II to position III in the working zone of the opening and take out unit 112 comprising in particular a pivotable suction unit 154 and a take-out suction unit 156.

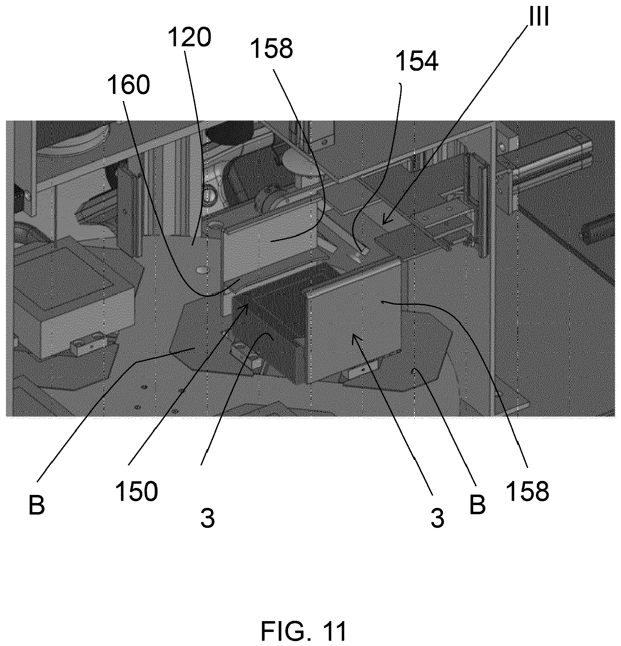

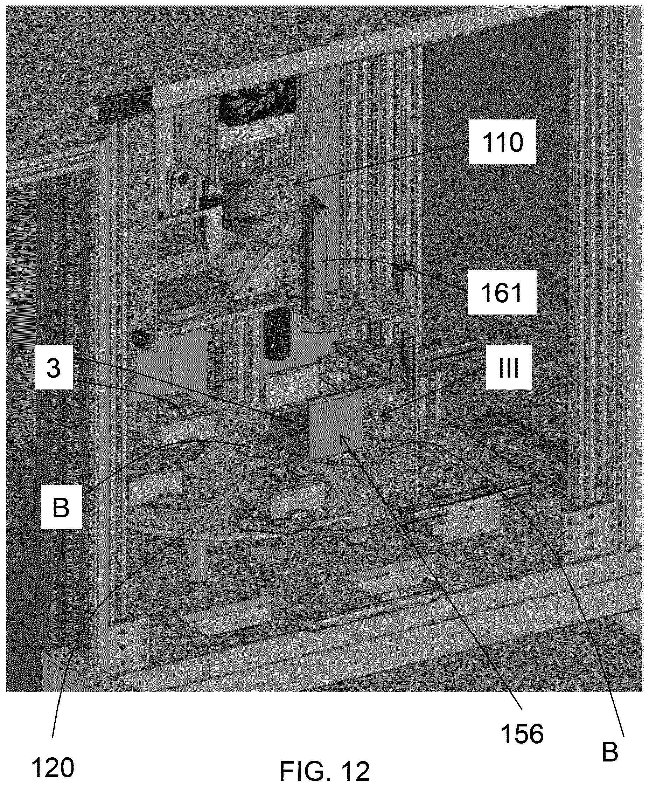

This is shown more in detail in figure 11 and 12.

Referring to figure 11, the pivotable suction unit 154 is configured to get in contact with the top of the package box 3.

The apparatus 100 is configured to control the pivotable suction unit 154 to get in contact with the top or cover face of the package box 3 and to suck this top face and to pull on the top face and to pivot. This will open the package box 3.

In order to prevent that the whole package box 3 is dragged when sucked on the top, the opening and take out unit 112 comprises a specific a hold-down device 156 for holding down the package box 3 during sucking operation.

The hold-down device 156 may be formed by upward walls 158 which can get into contact with lateral sides of the package box 3 and 90° angled metal strips 160 that are arranged on the upwards walls 158 and get into contact with the peripheral part of the top face of the package box 3.

Once the package box 3 is opened, the take-out suction unit 161 (see figure 12) will get into contact with the concave face of the optical element 11, suck and drag the optical element 11 out of the package box 3.

The 90° angled metal strips 160 are dimensioned in width, such that when the optical element 11 is dragged out of the package box 3, a possible plastic cup 13 inside the package box 3 is also fixed and not dragged out.

Then the robotized gripper 132 takes the optical element 11 by the edges and transfers it to the concerned transportation box 1.

Thus unpacking has been successfully realized.

Hereafter, the apparatus 100 is configured to rotate rotating plate 120 in position IV to be in the working zone of the waste management unit 114.

In particular, the waste management unit 114. comprises a mobile suction device 162 configured to take, if present, a plastic cup 13 out of the package box 3 and to evacuate it in a first dedicated waste container 164 and to evacuate then the empty package box 3 in a second dedicated waste container 166.

In order to do so, the mobile suction device can realize a lift and swiveling movement in order to transfer from position IV a cup 13 if present and the package box 3 into the dedicated waste containers 164 or 166.

Once the empty package box 3 is evacuated, the apparatus 100 is configured to rotate rotating plate 120 about 90° in order that the empty reception place 121 is rotation to position I again.

As already stated, use of a rotating plate 120 allows that cutting operation, opening and take out operation as well as waste evacuation can be realized at the same time allowing therefore an important throughput.

Further developments may be envisaged. In particular the plastic cups 13 may be made of different type of plastic for certain suppliers (for example polystyrol and PET), with a specific need of waste treatment. In this case the apparatus 100 may be adapted with more than one waste container for plastic, for example two waste containers or a container splitted into several, separate compartments for different types of plastics can be used.

It is also possible to envisage a specific plastic separation device which has a sensor to detect the plastic type and for example a slider device which pushes the plastic cup into a specific container in function of the detected plastic. In case of polystyrol and PET cups, distinction is quite easy to make with and optical sensor like a camera in detecting the color or absorption of the cup 13 because a polystyrol cup is white and a PET cup is transparent.

From the above, it is clear that the apparatus 100 can unpack closed package boxes safely and with high speed. Waste management is quite efficiently realized. Laser cutting allows precise opening and does not generate for example small particles or dust that prevent good processing of the optical elements 11 once unpacked.

### Reference list:

1-transportation box
3-package box
5- job-reference paper
7-A, 7-B - bar code
9-A, 9-B - identification code
11- optical element
11-A - convex face of optical element 11
11-B - concave face of optical element 11
13 - plastic cup
100 - apparatus for unpacking optical elements 11
102 - package identification unit
104 - reader for identification of a package box 3
104 -E - light emission cone
106 - first interface
108 - database concerning package boxes 3 and their content
110 - laser cutting unit
112 - opening and take out unit
114 - waste management unit
116 - second interface
118 - control unit
120 - rotating plate
121 - reception places
122 - conveyor
124 - park position
126 - scanner
128 - job database
130 - first suction unit
132 - robotized gripper
134 - clamping fingers
136 - laser
138 - mirror
140 - laser beam scanning unit
142 - laser beam
144 - optical height sensor
146 - third interface
148 - cutting pattern database
150 - border of the package box 3
152 - laser cutting lines (152-F full cut line , 152-I intermitted cut line)
154 - pivotable suction unit
156 - hold down device
158 - upward walls
160 - 90° angled metal strips
161 - take-out suction unit
162 - mobile suction device
164 - first waste container
166 - second waste container
B - blocking members on the rotation plate 120 for immobilizing a package box 3
I, II, III, IV - positions of rotation plate 120

## Claims

1. Apparatus (100) for unpacking optical elements (11) disposed in a package box (3) which is closed, the apparatus (100) comprising
- a package identification unit (102) equipped with a reader (104) for identifying the package box (3),
- a first interface (106) to exchange data with a package database (108) containing information related to the dimensions and identity of package boxes (3), to the orientation of an optical element (11) within a package box (3), to the presence or not of a plastic cup (13) within a package box (3),
- a laser cutting unit (110) configured to cut a package box (3) according to a dedicated cutting pattern,
- an opening and take-out unit (112) for opening a package box (3) which has been cut according to the dedicated cutting pattern, and for taking the optical element (11) out of the opened package (3),
- a waste management unit (114) configured to sort out the empty package box (3) and separately, when present, a plastic cup (13).

2. Apparatus according to claim 1, further comprising a second interface (116) to exchange data with a job database (128) containing data information related to lenses to be manufactured and a control unit (118) for comparing that the optical element (11) contained in a package box (3) complies with a lens manufacturing job to be carried out.

3. Apparatus according to claim 1 or 2, wherein a package box (3) is identified with a bar code or a QR-code, and the package identification unit (102) is configured to determine the relative position of the optical element (11) within the package box (3) in taking into account the orientation of the bar-code or QR-code as determined by the reader (104).

4. Apparatus according to claim 3, wherein the optical element (11) comprises a concave face (11-B) to be processed, the apparatus further comprising a robotized gripper (132) configured to place a package box (3) which is closed, in a way that the optical face to be processed of the optical element (3) is oriented upwards.

5. Apparatus according to claim 4, wherein the laser cutting unit (110) comprises an optical height sensor (144) configured to measure the height of a package box (3) and where the laser cutting unit (110) is configured such that in function of the measured height, a cutting laser beam (142) output by the laser cutting unit (110) focuses on a top face of the package box (3).

6. Apparatus according to any of claims 1 - 5, wherein the dedicated cutting pattern comprise at least one full cut line (152-F) and at least one intermitted cut line (152-I) serving as a hinge during opening of the package box.

7. Apparatus according to any of claims 1 - 6, further comprising a rotating plate (120) having several reception places (121) for receiving package boxes (3) and disposed at a regular angular interval to each other.

8. Apparatus according to any of claims 1 - 7, where the opening and take-out unit (112) comprises a hold-down device (156) for holding down the package box (3).

9. Apparatus according to any of claims 1 - 8, wherein the waste management unit (114) comprises a mobile suction device (162) configured to take, if present, a plastic cup (13) out of the package box (3) and to evacuate it in a first dedicated waste container (164) and to evacuate the empty package box (3) in a second dedicated waste container (166).

10. Method for unpacking optical elements (11) disposed in a package box (3) which is closed, the method comprising
- a package identification step for identifying with a reader (104) a package box (3),
- a data exchange step with a package database (108) containing information related to the dimensions and identity of package boxes, to the orientation of an optical element within a package box, to the presence or not of a plastic cup within a package box,
- a laser cutting step for cutting a package box (3) according to a dedicated cutting pattern,
- an opening and take-out step for opening a package box (3) which has been cut according to the dedicated cutting pattern, and for taking the optical element (11) out of the opened package (3),
- a waste management step configured to sort out the empty package (3) box and separately, when present, a plastic cup (13).

11. Method according to claim 10, further comprising a second data exchange step with a job database (128) containing data information related to lenses to be manufactured and a control step for comparing that the optical element (11) contained in a package box (3) complies with a lens manufacturing job to be carried out.

12. Method according to claim 10 or 11, wherein a package box (3) is identified with a bar code or a QR-code, and wherein during the package identification step, the relative position of the optical element (11) within the package box (3) is determined in taking into account the orientation of the bar-code or QR-code as determined by the reader (104).

13. Method according to claim 12, wherein the optical element (11) comprises a concave face (11-B) to processed, the method further comprising a step to place a package box (3) which is closed, in a way that the optical face to be processed of the optical element (11) is oriented upwards.

14. Method according to claim 13, wherein the height of a package box (3) is measured prior to the laser cutting step and where the focus of the laser beam (142) focuses on a top face of the package box (3).

15. Method according to any of claims 10 - 14, wherein the dedicated cutting pattern comprise at least a full cut line (152-F) and at least one intermitted cut line (152-1) serving as a hinge during opening of the package box (3).
